# DEMANDE DE BREVET EUROPEEN

(11) **EP 3 754 227 A1**
(43) Date de publication de la demande: **23.12.2020**
(21) Numéro de dépôt: 19181027.4
(22) Date de dépôt: 18.06.2019
(51) Int. Cl.: F16H 59/02

(54) **BUTEE DE MARCHE ARRIERE A HAUTE ENDURANCE**

(71) Demandeur: DURA Automotive Holdings U.K., Ltd., Birmingham, B35 7AG (GB)
(72) Inventeur: BIAGGINI, Jean-Marie, 78640 Neauphle le Vieux (FR)
(74) Mandataire: Cabinet Laurent & Charras

(57) **Abrégé**

Ensemble support pour le montage avec capacité d'articulation d'un levier (1) de commande d'une boîte de vitesses d'un véhicule automobile, ledit ensemble étant équipé d'une première partie (2) apte à faire office de butée à une deuxième partie (3) solidaire du levier (1) pour la sélection du couloir de passage d'une vitesse de marche arrière.

Selon l'invention, la première partie (2) ou la deuxième partie (3) comprend, au niveau d'une surface de contact entre les première et deuxième parties (2, 3), des moyens (5) réalisés dans un matériau présentant un coefficient de frottement inférieur à celui de la partie (2, 3) sur laquelle les moyens (5) sont montés.

## Description

### DOMAINE TECHNIQUE

L'invention se rattache au secteur technique des équipements pour véhicules automobiles.

Plus particulièrement, l'invention concerne un ensemble support pour le montage, avec capacité d'articulation, d'un levier de commande d'une boîte de vitesses d'un véhicule automobile.

L'invention trouve une application avantageuse pour la réalisation d'une butée de marche arrière à haute endurance.

### ART ANTERIEUR

Dans le cas d'une boîte de vitesses, mécanique notamment, de manière parfaitement connue, la commande de sélection de passage des vitesses s'effectue au moyen d'un levier, monté avec capacité de déplacement dans un boîtier support fixé, généralement, au niveau de l'habitacle du véhicule automobile. L'extrémité inférieure du levier présente des agencements pour assurer, généralement en combinaison avec des organes de renvoi, la sélection et le passage des vitesses par l'intermédiaire de câbles, de barres, ou autres.

L'invention concerne, plus particulièrement, un ensemble support pour un levier de commande, du type de ceux présentant une première partie apte à faire office de butée audit levier, afin d'éviter tout déclenchement intempestif de la marche arrière. Cette première partie est généralement connue dans le domaine de l'automobile sous le nom de « mur » ou de « trottoir ». Dans ce cas, le levier présente des agencements conformés pour coopérer en appui avec cette butée, mais également pour échapper cette butée, afin de permettre l'enclenchement de la marche arrière. Par exemple, ces agencements sont constitués par une gâchette, actionnable manuellement par le conducteur. Ou bien, pour échapper cette butée, il est nécessaire d'appuyer sur le levier de commande pour enclencher la marche arrière.

Dans l'art antérieur, la deuxième partie solidaire du levier destinée à venir buter contre le « mur » ou « trottoir » s'use à chaque passage de vitesse de la ligne 1^{ère} ou 2^{nde} de manière importante dans le temps. Les conséquences d'une telle usure sont une modification de la surface de contact de la deuxième partie, et notamment de la zone de buté contre le « mur » ou « trottoir » de marche arrière. Cette usure génère tout d'abord un mauvais positionnement du levier par rapport au couloir 1^{ère}/2^{nde} de la boite de vitesses, provoquant des difficultés de passage de vitesses, pour finalement entraîner un problème sécuritaire car si la dimension est diminuée, cela peut amener le conducteur à engager une mauvaise vitesse, par exemple à engager la marche arrière au lieu d'engager la première vitesse, ou inversement.

### EXPOSE DE L'INVENTION

L'un des buts de l'invention est donc de proposer un ensemble support pour le montage avec capacité d'articulation d'un levier de commande d'une boîte de vitesses d'un véhicule automobile, dont les problèmes de sécurité liés à l'usure de la deuxième partie destinée à venir buter contre le « mur » ou « trottoir » de marche arrière sont supprimés.

À cet effet, il a été mis au point un tel ensemble équipé, d'une manière connue, d'une première partie apte à faire office de butée à une deuxième partie, solidaire du levier, pour la sélection du couloir de passage d'une vitesse de marche arrière.

Selon l'invention, la première partie ou la deuxième partie comprend, au niveau d'une surface de contact entre les première et deuxième parties, des moyens réalisés dans un matériau présentant un coefficient de frottement inférieur à celui de la partie sur laquelle les moyens sont montés, et éventuellement inférieur à celui de la partie contre laquelle les moyens sont destinés à buter.

De cette manière, l'usure des première et/ou deuxième partie est très fortement diminuée, voire supprimée, ce qui augmente le confort de passage des vitesses et diminue voire supprime le risque sécuritaire.

La deuxième partie destinée à venir buter contre la première partie, à savoir contre la butée de marche arrière, bénéficie d'une grande stabilité dimensionnelle tout au long de la vie du véhicule.

Selon une forme de réalisation particulière, les moyens dont le coefficient de frottement est avantageux comprennent du polytétrafluoroéthylène. Bien entendu, ces moyens peuvent être constitués de toute matière appropriée, par exemple en métal, ou en alliage à base d'aluminium. Ils peuvent par exemple se présenter sous la forme d'une matière frappée, ou d'une tôle de recouvrement.

Selon une forme de réalisation particulière, les moyens comprennent un patin rapporté et fixé sur la première partie ou sur la deuxième partie.

Par exemple, le patin présente une face plane fixée sur la première partie ou la deuxième partie, et une face opposée bombée destinée à former la surface de contact entre les première et deuxième parties. L'aspect bombé permet d'avoir une faible surface de contact, diminuant le frottement, mais en cas d'usure, cette surface augmente, offrant ainsi une résistance accrue.

Selon une forme de réalisation particulière, le patin et la première ou deuxième partie comprennent des moyens d'encliquetage complémentaires.

Par exemple, les moyens d'encliquetage complémentaires se présentent sous la forme d'un orifice ménagé dans la première ou deuxième partie, et de deux branches élastiques en saillie du patin et équipées d'ergots, les branches étant destinées à se rapprocher l'une de l'autre pour pénétrer dans l'orifice et s'y encliqueter au moyen des ergots.

Selon l'invention, les moyens avec le coefficient de frottement avantageux peuvent être positionnés sur la première ou deuxième partie. Selon un mode de réalisation préféré, les moyens sont positionnés sur la deuxième partie, par exemple sur une gâchette de marche arrière solidaire du levier.

### BREVE DESCRIPTION DES DESSINS

D'autres caractéristiques et avantages de l'invention ressortiront clairement de la description qui en est réalisée ci-après, à titre indicatif et nullement limitatif, en référence aux figures annexées, dans lesquelles :
- la figure 1 est une représentation schématique illustrant, en perspective, un ensemble support pour le montage avec capacité d'articulation d'un levier de commande d'une boîte de vitesses, selon l'art antérieur ;
- la figure 2 est une représentation schématique similaire à celle de la figure 1, la deuxième partie, solidaire du levier étant en butée contre la première partie ;
- la figure 3, illustre en perspective éclatée un patin en plastique chargé de Polytétrafluoroéthylène ou MOS2 et une gâchette de marche arrière formant la deuxième partie d'un ensemble selon l'invention, destinée à venir buter contre une butée de marche arrière ;
- la figure 4 est une représentation schématique, similaire à celle de la figure 3, le patin et la gâchette étant encliquetés l'un à l'autre ;
- la figure 5 illustre, en coupe, l'encliquetage entre le patin et la gâchette de marche arrière.

### EXPOSE DETAILLE DE L'INVENTION

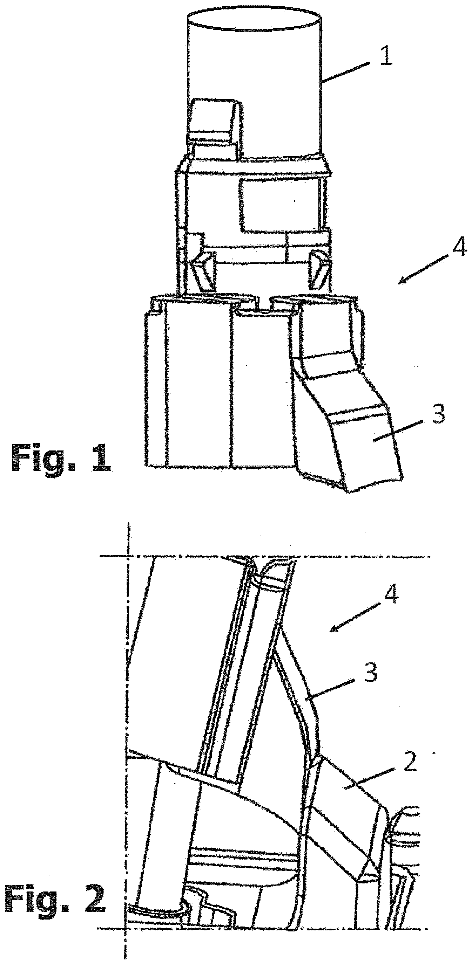

En référence aux figures 1 et 2 illustrant l'art antérieur, l'ensemble du boîtier support présente, de manière parfaitement connue pour un homme du métier, des agencements pour le montage avec capacité d'articulation d'un levier de commande (1) pour le passage et la sélection des vitesses.

Par ailleurs, l'ensemble support présente une première partie (2), apte à faire office de butée à une deuxième partie (3) solidaire du levier (1), afin d'éviter tous déclenchements intempestifs de la marche arrière.

Dans ce cas, le levier (1) de commande présente des agencements pour échapper cette première partie (2), afin de permettre l'enclenchement de la marche arrière.

De manière connue, ces agencements sont, par exemple, constitués par une gâchette (4) actionnable manuellement par le conducteur. Dans cette configuration, la deuxième partie (3) est alors une partie de la gâchette (4) et est destinée à venir buter contre la première partie (1) pour empêcher le passage de la marche arrière.

Dans une autre configuration, les agencements sont constitués par un élément assujetti au levier (1), et escamotable en hauteur lorsqu'un effort d'appui est exercé sur le levier de commande.

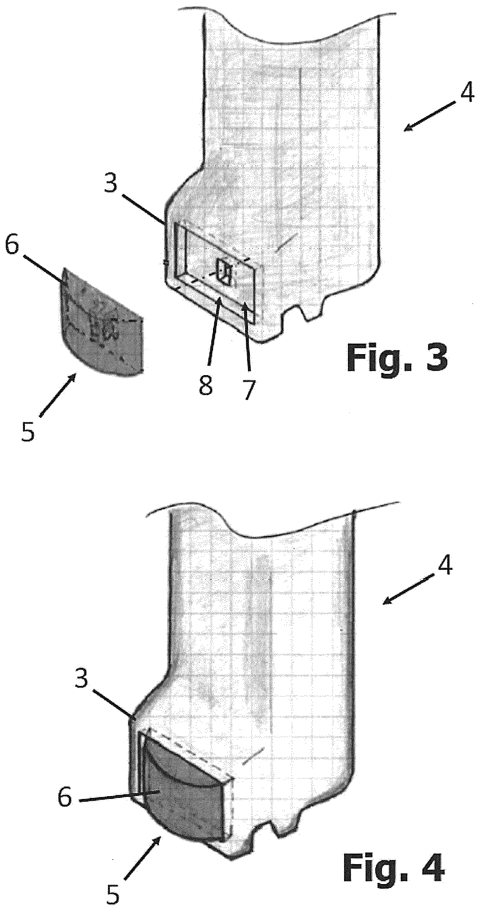

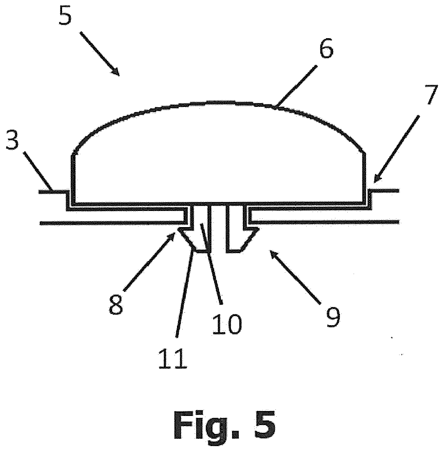

Selon l'invention et en référence aux figures 3 à 5, la deuxième partie (3) comprend, au niveau d'une surface de contact avec la première partie (2), des moyens (5) réalisés dans un matériau présentant un coefficient de frottement inférieur à celui de la deuxième partie (3), et de préférence également inférieur à celui de la première partie (2) contre laquelle les moyens (5) sont destinés à buter.

Dans un exemple particulier, la deuxième partie (3) est réalisée en résine polyamide renforcée de 30 à 40% de fibres de verre, et les moyens (5) sont par exemple réalisés à partir de Polytétrafluoroéthylène ou Disulfure de Molybdène (MOS2) ou autre diminuant le coefficient de frottement.

Dans le mode de réalisation illustré, les moyens (5) sont sous la forme d'un patin (6). Le patin (6) est fixé de toute manière appropriée. Par exemple, le patin (6) présente une face plane fixée sur la gâchette (4) de marche arrière, et une face opposée bombée destinée à former la surface de contact avec la première partie (2).

De préférence, le patin (6) et la gâchette (4) de marche arrière comprennent des moyens d'encliquetage (9) complémentaires.

Par exemple, la gâchette (4) de marche arrière présente un évidement (7) de forme complémentaire au patin (6), dans lequel est ménagé un orifice (8).

Le patin (6) comprend, quant à lui, deux branches élastiques (10) en saillie, chacune pourvue à son extrémité libre d'un ergot (11). Les ergots (11) sont diamétralement opposés, et les branches élastiques (10) sont destinées à pénétrer dans l'orifice (8), et à se rapprocher l'une de l'autre pour s'y encliqueter après le passage des ergots (11). Une fois encliqueté et mis en place, le patin (6) se trouve positionné dans l'évidement (7).

De cette manière, lorsque la gâchette (4) de marche arrière vient buter contre la première partie (2) faisant office de butée de marche arrière, le contact est réalisé par l'intermédiaire du patin (6) à coefficient de frottement diminué de sorte que l'usure dudit patin (6) est diminuée, voire nulle.

Ainsi, le contact entre la gâchette (4) de marche arrière et la première partie (2) faisant office de butée de marche arrière se fait sur une surface de contact dont la dimension est parfaitement maîtrisée, tout au long de la durée de vie de l'ensemble. Ceci permet alors de garantir une sécurité d'utilisation optimale.

L'agencement de ce patin (6) est avantageux, et peut se présenter sous la forme d'une pièce standard, pour équiper les gâchettes (4) de marche arrière des autres véhicules, diminuant ainsi son coût de revient. De plus, le volume du patin (6) étant largement inférieur à celui de la gâchette (4), le surcoût éventuel de la matière à faible coefficient de frottement n'affecte pas le coût de ladite gâchette (4).

D'autres modes de réalisation peuvent être envisagés. Par exemple, les moyens (5) peuvent être positionnés sur la première partie (2) faisant office de butée de marche arrière.

## Revendications

1. Ensemble support pour le montage avec capacité d'articulation d'un levier (1) de commande d'une boîte de vitesses d'un véhicule automobile, ledit ensemble étant équipé d'une première partie (2) apte à faire office de butée à une deuxième partie (3) solidaire du levier (1) pour la sélection du couloir de passage d'une vitesse de marche arrière, ***caractérisé* en ce que** la première partie (2) ou la deuxième partie (3) comprend, au niveau d'une surface de contact entre les première et deuxième parties (2, 3), des moyens (5) réalisés dans un matériau présentant un coefficient de frottement inférieur à celui de la partie (2, 3) sur laquelle les moyens (5) sont montés.

2. Ensemble selon la revendication 1, ***caractérisé* en ce que** les moyens (5) comprennent du Polytétrafluoroéthylène ou du Disulfure de Molybdène.

3. Ensemble selon l'une des revendications précédentes, ***caractérisé* en ce que** les moyens (5) comprennent un patin (6) rapporté et fixé sur la première partie (2) ou sur la deuxième partie (3).

4. Ensemble selon la revendication 3, ***caractérisé* en ce que** le patin (6) présente une face plane fixée sur la première partie (2) ou la deuxième partie (3), et une face opposée bombée destinée à former la surface de contact entre les première et deuxième parties (2, 3).

5. Ensemble selon l'une des revendications 3 à 4, ***caractérisé* en ce que** le patin (6) et la première ou deuxième partie (2, 3) comprennent des moyens d'encliquetage (9) complémentaires.

6. Ensemble selon la revendication 5, ***caractérisé* en ce que** les moyens d'encliquetage (9) complémentaires sont sous la forme d'un orifice (8) ménagé dans la première ou deuxième partie (2, 3), et de deux branches élastiques (10) en saillie du patin (6) et équipées d'ergots (11), les branches (10) étant destinées à se rapprocher l'une de l'autre pour pénétrer dans l'orifice (8) et s'y encliqueter au moyen des ergots (11).

7. Ensemble selon l'une des revendications précédentes, ***caractérisé* en ce que** les moyens (5) sont positionnés sur la deuxième partie (3).

8. Ensemble selon la revendication 7, ***caractérisé* en ce que** les moyens (5) sont positionnés sur une gâchette (4) de marche arrière solidaire du levier (1).
